# EUROPÄISCHE PATENTSCHRIFT

(11) **EP 1 000 215 B1**
(45) Veröffentlichungstag und Bekanntmachung des Hinweises auf die Patenterteilung: **07.05.2003**
(21) Anmeldenummer: 98966781.1
(22) Anmeldetag: 17.12.1998
(51) Int. Cl.: E05F 15/16, H02K 23/66

(54) **ELEKTRONIKMODUL FÜR EINE ELEKTROMOTORISCH BETRIEBENE ANTRIEBSEINHEIT**
ELECTRONIC MODULE FOR A DRIVE UNIT POWERED BY AN ELECTRICAL MOTOR
MODULE ELECTRONIQUE POUR UNITE D'ENTRAINEMENT COMMANDEE PAR UN MOTEUR ELECTRIQUE

(30) Priorität: 05.02.1998 DE 19804490; 09.11.1998 DE 19851455
(43) Veröffentlichungstag der Anmeldung: 17.05.2000
(73) Patentinhaber: ROBERT BOSCH GMBH, 70442 Stuttgart (DE)
(72) Erfinder: WEBER, Matthias, D-76534 Baden-Baden (DE); KNAB, Norbert, D-77767 Appenweier (DE); HAUSSECKER, Walter, D-77830 Bühlertal (DE); VOEHRINGER, Klaus, D-76316 Malsch (DE); RIEHL, Günther, D-77830 Bühlertal (DE); HAGER, Martin, D-77830 Bühlertal (DE); ROTH, Klaus, F-14125 Mondeville (FR); BENZ, Jochen, D-89567 Sontheim (DE)
(86) Internationale Anmeldenummer: DE9803719
(87) Internationale Veröffentlichungsnummer: WO99040285

(56) Entgegenhaltungen:
- EP-A- 0 538 495
- DE-A- 4 225 496
- DE-A- 19 746 518
- US-A- 5 528 093

## Beschreibung

### Stand der Technik

Die Erfindung betrifft ein Elektronikmodul für eine elektromotorisch betriebene Antriebseinheit mit den im Oberbegriff des Anspruchs 1 angegebenen Merkmalen.

Ein derartiges Elektronikmodul ist beispielsweise in der deutschen Patentanmeldung mit dem Aktenzeichen 1 97 46 518 beschrieben. Das Elektronikmodul weist ein als Einschubmodul ausgebildetes offenes Elektronikgehäuseteil mit einem Stecker und einer Aufnahme für eine Leiterplatte auf. Eine in die Aufnahme eingesetzte Leiterplatte ist mit Kontaktelementen des Steckers und Leistungsstromleitern zur Motorkontaktierung elektrisch verbunden. Bei der Festlegung des Einschubmoduls am Gehäuse der Antriebseinheit wird ein von dem Einschubmodul abstehender Abschnitt der Leiterplatte in das Gehäuse der Antriebseinheit eingeführt, so daß ein auf diesem Abschnitt angeordneter Hall-Sensor beim Einschieben in die Nähe eines auf der Motorankerwelle der Antriebseinheit angeordneten Ringmagneten gelangt. Gleichzeitig kontaktieren von dem Modul abstehende Kontaktabschnitte der Leistungsstromleiter entsprechend ausgebildete Gegenkontakte des Getriebemotors der Antriebseinheit. Bei vollständig eingeschobenem Modul wird ein am Elektronikgehäuseteil vorgesehener Dichtring an das Gehäuse der Antriebseinheit angepreßt, so daß ein allseitig geschlossenes Gehäuse entsteht. Nachteilig dabei ist, daß das Elektronikgehäuseteil des Moduls nicht vom Getriebe- und Motorgehäuse der Antriebseinheit abgegrenzt ist. Im Gehäuse der Antriebseinheit vorhandene Schmutzpartikel und Feuchtigkeit gelangen daher schnell auf die elektrischen und elektronischen Bauteile der Leiterplatte, was spezielle Schutzmaßnahmen wie beispielsweise eine aufwendige doppelseitige Lackierung der Leiterplatte erforderlich macht. Weiterhin ist nachteilig, daß bei abgenommenem Elektronikmodul die Leiterplatte und alle elektrischen Bauteile frei zugänglich und daher vor Beschädigungen nicht geschützt sind. Außerdem ist eine aufwendige Justage notwendig, um die den Hall-Sensor tragende Leiterplatte in bezug auf die Motorankerwelle auszurichten.

### Vorteile der Erfindung

Durch das erfindungsgemäße Elektronikmodul mit den kennzeichnenden Merkmalen des Anspruchs 1 werden die beim Stand der Technik auftretenden Nachteile vermieden. Eine doppelseitige Schutzlackierung der Leiterplatte ist nicht erforderlich, da die Leiterplatte in einem separaten Gehäuseteil angeordnet ist, welches mit einem Deckel verschließbar ist, so daß die empfindlichen elektronischen Bauteile der Leiterplatte vor Verunreinigungen und Feuchtigkeit geschützt in dem Elektronikgehäuseteil angeordnet sind. Die Leistungsstromleiter sind über ein zweites Steckerteil aus dem Elektronikgehäuseteil herausgeführt. Bei der Festlegung des Elektronikgehäuseteils am Gehäuse der Antriebseinheit wird das zweite Steckerteil durch eine entsprechend ausgebildete Öffnung in das Gehäuse der Antriebseinheit eingeführt, so daß die von dem Elektronikgehäuseteil abstehenden Kontaktabschnitte der Leistungsstromleiter mit im Gehäuse der Antriebseinheit angeordneten Motorkontakten kontaktieren. Durch das separate Elektronikgehäuseteil wird in vorteilhafter Weise der Montageaufwand bei der Festlegung des Elektronikmoduls am Gehäuse der Antriebseinheit erleichtert. Ein aufwendige Justage und Ausrichtung der Leiterplatte in bezug auf die Motorankerwelle entfällt. Vorteilhaft kann das Elektronikmodul in verschiedene Typen von elektromotorisch betriebenen Antriebseinheiten eingesetzt werden.

Vorteilhafte Ausgestaltungen und Weiterentwicklungen der Erfindung werden durch die in den Unteransprüchen beschriebenen Merkmale ermöglicht. So können elektrische Anschlußleitungen von Bauelementen, die in der Nähe der Motorankerwelle positioniert und mit der Leiterplatte elektrisch verbunden werden müssen, wie beispielsweise Teile einer Steuer- oder Regelelektronik, vorteilhaft in dem zweiten Steckerteil vorgesehen sein. Besonders vorteilhaft ist, wenn das zweite Steckerteil zapfenförmig ausgebildet ist und das Bauelement, welches z.B. ein Hall-IC-Bauelement sein kann, auf dem von dem Elektronikgehäuseteil abstehenden Ende des zapfenförmigen Steckerteils angeordnet ist. Beim Einführen des zweiten Steckerteils in das Gehäuse einer Antriebseinheit wird das Hall-IC-Bauelement dann automatisch in die angestrebte Endposition geschoben. Das das Elektronikgehäuseteil kann beispielsweise mit dem ersten und zweiten Steckerteil in einen Herstellungsschritt einstückig als Spritzgußteil aus Kunststoff hergestellt wird.

Das zweite Steckerteil kann aber auch als separates Teil aus Isolierstoff gefertigt werden und erst nach seiner Herstellung an dem Elektronikgehäuseteil angeordnet werden. So ist es beispielsweise möglich, Leistungstromleiter und Anschlußleitungen teilweise in ein Isolierstoffteil mit zwei sich gegenüberliegeden Endabschnitten einzubetten, anschließend ein Hall-IC-Bauelement an einem Endabschnitt des zweiten Steckerteils mit den freien Anschlußflächen der Anschlußleitungen beispielsweise über Bonddrähte elektrisch zu verbinden und dann das Hall-IC-Bauelement mit einer zugleich isolierenden und vor Umwelteinflüssen schützenden Vergußmasse vollständig abzudecken. Anschließend kann das separat gefertigte zweite Steckerteil an dem Elektronikgehäuseteil angeordnet werden. Vorteilhaft hierbei ist, daß zur Herstellung des zweiten Steckerteils andere Techniken oder Materialien eingesetzt werden können als bei der Herstellung des restlichen Elektronikgehäuseteils und daß das Hall-IC-Bauelement vollständig in Isolierstoff eingebettet und dadurch vor schädlichen Umwelteinflüssen geschützt ist. Beispielsweise kann das zweite Steckerteil als mit Isolierstoff umspritztes Stanzgitterteil oder als 3D-MID-Bauteil (Moulded Interconnection Devices) hergestellt werden.

Weiterhin ist vorteilhaft, wenn in dem zweiten Steckerteil ein Druckausgleichskanal vorgesehen ist. Ein dicht verschlossenes Elektronikgehäuseteil benötigt ein Druckausgleichselement. Da die Gehäuse der Antriebseinheiten bereits ein solches Druckausgleichselement aufweisen, kann dieses über den Druckausgleichskanal für das Elektronikgehäuse vorteilhaft mitbenutzt werden.

In einem anderen Ausführungsbeispiel ist das Hall-Sensor-Element auf der Leiterplatte im Elektronikgehäuse angeordnet. In dem zweiten Steckerteil können dann vorteilhaft Magnetflußleiter angeordnet sein, welche das variable Magnetfeld eines auf der Motorankerwelle rotierenden Magneten erfassen und dem Hall-Sensor-Element zuleiten.

Weiterhin ist vorteilhaft, die leiterplattenseitigen Anschlußabschnitte der Kontaktelemente des ersten Steckerteils, der Leistungsstromleiter und der zusätzlichen elektrischen Anschlußleitungen parallel zueinander verlaufend durch Kontaktöffnungen der Leiterplatte hindurchzuführen. Die Leiterplatte kann dann bei der Montage mit einem Handgriff auf die Anschlußabschnitte aufgesteckt werden. Ist die Leiterplatte im Gehäuseinnenraum unmittelbar dem Deckel gegenüberliegend angeordnet, können die Anschlußabschnitte bei abgenommenem Deckel vorteilhaft im preisgünstigen Tauchlotverfahren mit den Anschlußabschnitten verlötet werden.

Besonders vorteilhaft ist weiterhin, wenn ein zur Motoransteuerung der Antriebseinheit benötigtes Relais im Elektronikgehäuse derart angeordnet ist, daß die Relaisanschlüsse parallel zu den übrigen Anschlußabschnitten durch Kontaktöffnungen der Leiterplatte hindurchgeführt werden können. Hierdurch wird erreicht, daß die Leiterplatte vor dem Einbau in das Elektronikmodul preisgünstig nur mit SMD-Bauelementen bestückt zu werden braucht. Das mit der Leiterplatte zu verbindende Relais kann in dem Elektronikgehäuseteil vormontiert werden und wird erst nach dem Einstecken der Leiterplatte in die Aufnahme des Elektronikmoduls zusammen mit den übrigen Anschlußkontakten verlötet. Hierdurch kann ein zusätzlicher Herstellungsschritt eingespart werden.

### Zeichnung

Ein Ausführungsbeispiel der Erfindung ist in den Zeichnungen dargestellt und wird in der nachfolgenden Beschreibung näher erläutert. Es zeigt
Fig. 1 das erfindungsgemäße Elektronikmodul bei abgenommenem Deckel, ohne Leiterplatte und Relais,
Fig. 2 das Elektronikmodul bei abgenommenem Deckel, ohne Leiterplatte aber mit Relais,
Fig. 3 das Elektronikmodul bei abgenommenem Deckel, mit Leiterplatte und Relais,
Fig. 4 das mit dem Deckel verschlossene Elektronikmodul,
Fig. 5 eine Antriebseinheit mit daran festgelegten Elektronikmodul,
Fig. 6 eine perspektivische Teilansicht des Elektronikmoduls und eines Teils einer Antriebseinheit,
Fig. 7 eine perspektivische Ansicht des zweiten Steckerteils als separat gefertigtes Teil ohne Hall-IC-Bauelement und ohne Vergußmasse,
Fig. 8 eine Draufsicht auf die Stirnfläche des in Fig. 7 gezeigten zweiten Steckerteils mit Hall-IC-Bauelement,
Fig. 9 eine Ansicht des zweiten Steckerteils aus Fig. 7 von oben,
Fig. 10 einen Querschnitt durch das zweite Steckerteil entlang der Linie A-A in Fig. 11 mit auf dem Hall-IC-Bauelement aufgebrachter Vergußmasse und
Fig. 11 eine Ansicht des zweiten Steckerteils aus Fig. 7 von unten.

### Beschreibung der Ausführungsbeispiele

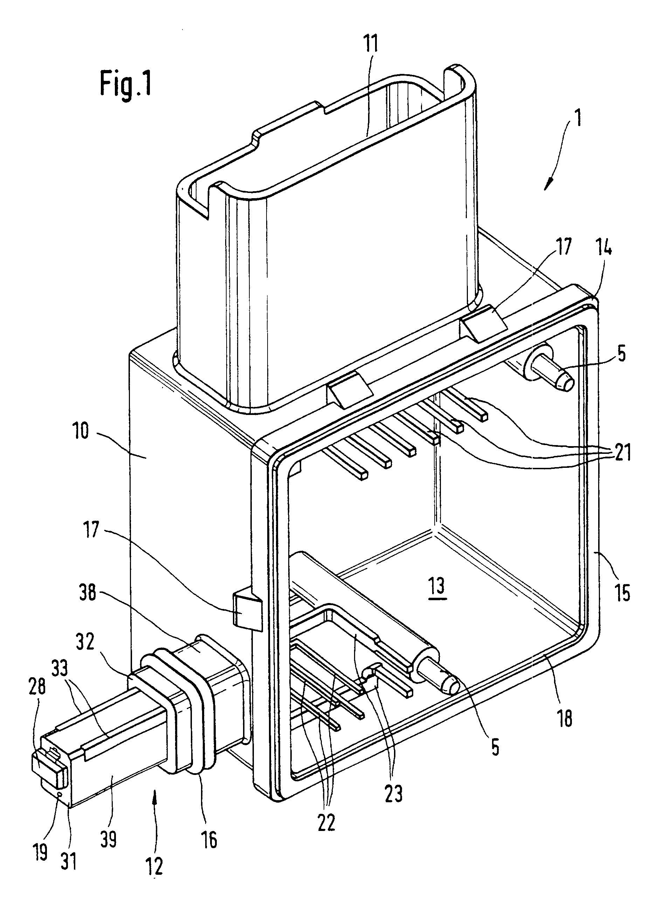

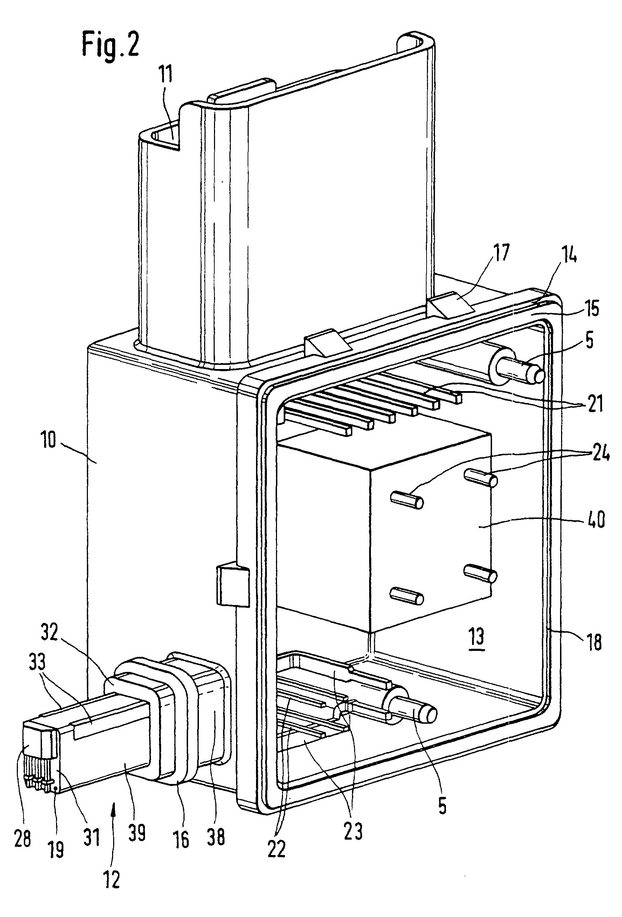

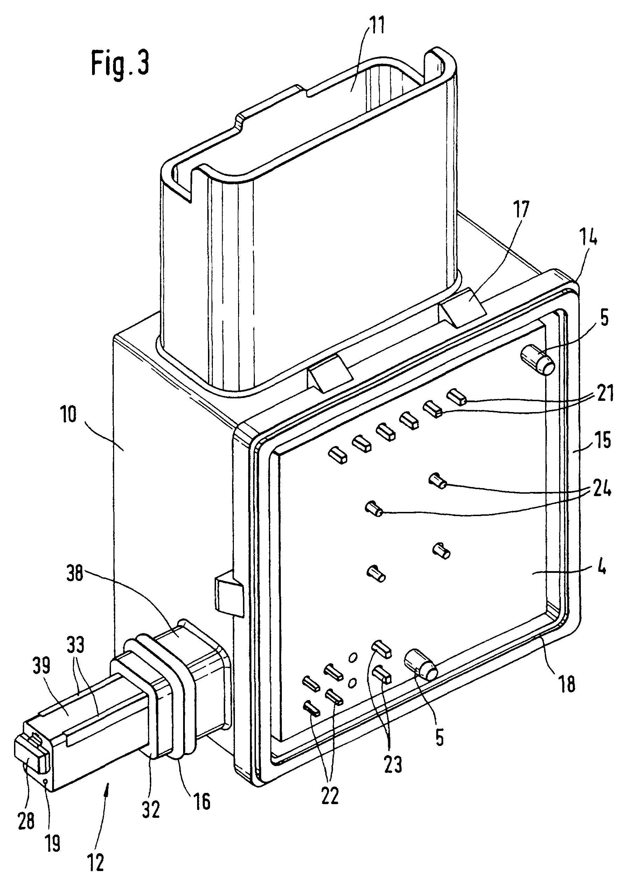

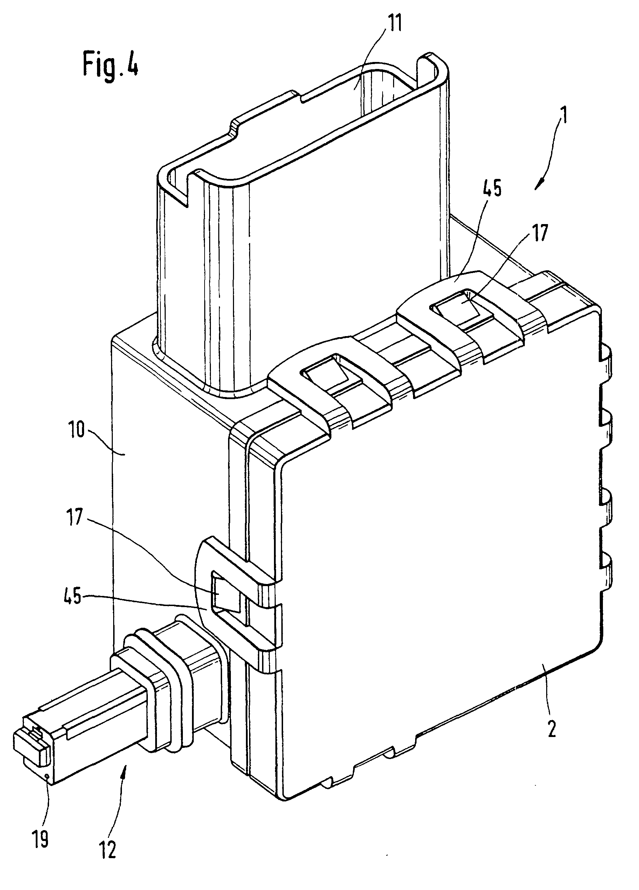

Wie in Fig. 1 dargestellt, umfaßt das erfindungsgemäße Elektronikmodul 1 ein kastenförmiges Elektronikgehäuseteil 10 mit einem Boden, vier Seitenwänden und einer durch die Seitenwände begrenzten Öffnung 18, durch welche der Gehäuseinnenraum 13 des Elektronikgehäuseteils 10 zugänglich ist. Die Öffnung wird durch eine umlaufende Auflagefläche 14 für einen Gehäusedeckel 2 begrenzt, der an von den Seitenwänden nach außen abstehenden Nasen 17 befestigbar ist. Damit das Gehäuse 10 mit dem Deckel 2 dicht verschlossen werden kann, weist die Auflagefläche 14 einen umlaufenden Dichtring 15 auf. Weiterhin weist das Elektronikgehäuseteil 10 an einer Seitenwand ein erstes Steckerteil 11 und an einer zweiten Seitenwand ein zweites nach außen abstehendes Steckerteil 12 auf. Die Stekkerteile 11,12 sind in diesem ersten Ausführungsbeispiel zusammen mit dem Elektronikgehäuseteil 10 einstückig als Spritzgußteil aus Kunststoff hergestellt. Das erste Steckerteil 11 ist zum Anschluß eines externen Steuerkabels vorgesehen und weist Kontaktelemente 21 auf, die partiell in das Gehäuseteil 10 eingespritzt sind. Wie in Fig. 1 zu erkennen ist, weist das zweite Steckerteil 12 zwei Leistungsstromleiter 23 und zusätzlich vier elektrische Anschlußleitungen 22 auf, die ebenfalls partiell in das zweite Steckerteil 12 eingespritzt sind und in den Gehäuseinnenraum 13 hineinragende, freiliegende Anschlußabschnitte aufweisen. Wie in Fig. 1 weiterhin zu erkennen ist, sind die in den Gehäuseinnenraum 13 hineinragenden Anschlußabschnitte der Leistungsstromleiter 23, Anschlußleitungen 22 und Kontaktelemente 21 in einer Richtung zur Öffnung 18 des Elektronikgehäuseteils 10 hin abgebogen, so daß alle Anschlußabschnitte im Gehäuse inneren parallel zueinander ausgerichtet sind. Im Gehäuseinneren 13 sind zwei Steckzapfen 5 vorgesehen, welche parallel zu den Anschlußabschnitten verlaufen und als Aufnahme für eine Leiterplatte 4 dienen. Wie in Fig. 2 dargestellt, kann ein Relais 40 bei der Montage des Elektronikmoduls in das Elektronikgehäuseteil 10 eingesetzt und darin derart befestigt werden, daß sich die Relaisanschlüsse 24 parallel zu den übrigen Anschlußabschnitten 21,22,23 und den Steckzapfen 5 in Richtung der Öffnung 18 erstrecken. Durch die Öffnung 18 wird eine Leiterplatte 4 mit nicht dargestellten Bauelementen in das Elektronikgehäuseteil 10 eingesetzt. Die Leiterplatte 4 ist zuvor einseitig mit SMD-Bauteilen bestückt worden und weist Kontaktöffnungen beispielsweise in Form von durchmetallisierten Löchern auf. Beim Einführen in das Elektronikgehäuseteil 10 wird die Leiterplatte 4 auf die Steckzapfen 5, wie in Fig. 3 gezeigt, aufgesteckt. Gleichzeitig werden die Anschlußabschnitte der Kontaktelemente 21, der Anschlußleitungen 22, der Leistungsstromleiter 23 und der Relaisanschlüsse 24 durch die Kontaktöffnungen der Leiterplatte hindurchgeführt und anschließend im Tauchlötverfahren in einem Arbeitsgang mit der Leiterplatte verlötet. Ein zusätzlicher Verfahrensschritt zur Befestigung des Relais auf der Leiterplatte nach der SMD-Lötung und vor dem Einbau der Leiterplatte ist also nicht erforderlich. Wie in Fig. 4 gezeigt wird das Elektronikgehäuseteil 10 nach der Tauchlötung mit einem Deckel 2 verschlossen. Der Deckel 2 weist umfänglich mehrere elastisch federnde, abstehende Laschen 45 als Rastmittel auf, die beim Aufsetzen des Deckels 2 auf den Auflagebereich 14 mit den Nasen 17 des Elektronikgehäuseteils 10 verrasten. Dabei wird der elastische Dichtring 15 zwischen Deckel 2 und Auflagebereich 14 eingeklemmt, so daß die Öffnung 18 des Elektronikgehäuseteils 10 dicht verschlossen wird und die Leiterplatte 4 vollständig geschützt in dem Elektronikgehäuseteil 10 angeordnet ist.

Das zweite von der Außenseite des Elektronikgehäuseteils 10 abstehende Steckerteil 12 besitzt in diesem ersten Ausführungsbeispiel eine zapfenartige Form mit rechteckiger Querschnittsfläche. Das Steckerteil 12 weist einen vom Gehäuse 10 abstehenden, einen umlaufenden Dichtungsring 16 tragenden Sockel 38 auf, von dem über eine abgestufte Kante 32 ein quaderförmiger Endabschnitt 39 absteht. Wie in Fig. 1 zu erkennen ist, sind die Leistungsstromleiter 23 in dem Sockel 38 vollständig von Kunststoff umgeben. Kontaktabschnitte 33 der Leistungsstromleiter 23 treten an der abgestuften Kante 32 aus dem Sockel 38 heraus und liegen an zwei Außenkanten des Endabschnittes 39 frei kontaktierbar an. Weiterhin sind in dem Steckerteil 12 vier elektrische Anschlußleitungen 22 eingebettet, die mit einem Hall-IC-Bauelement 28 leitend verbunden sind, welches an dem vom Gehäuse abstehenden Ende 31 des Steckerteils 12 angeordnet ist. Ein Druckausgleichkanal 19 erstreckt sich von dem abstehenden Ende 31 bis in den Gehäuseinnenraum 13.

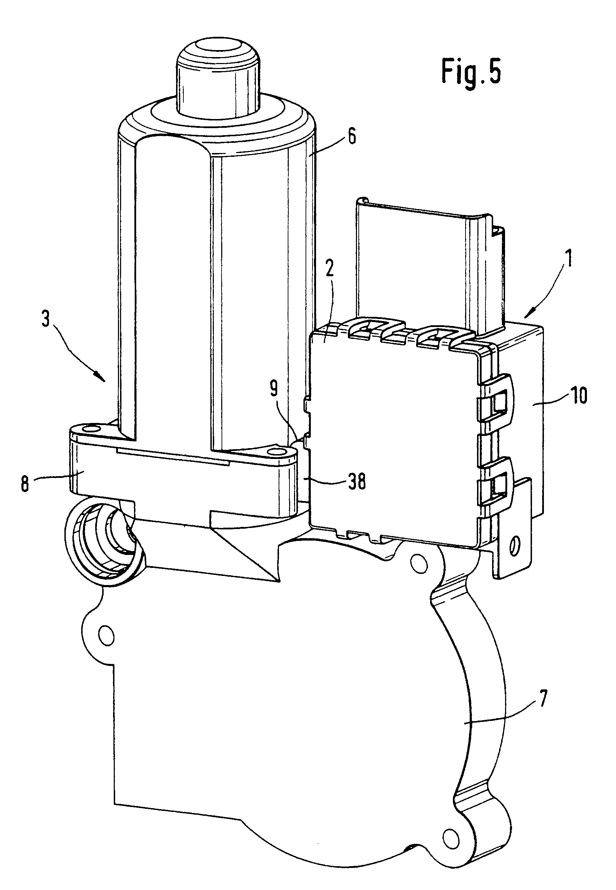

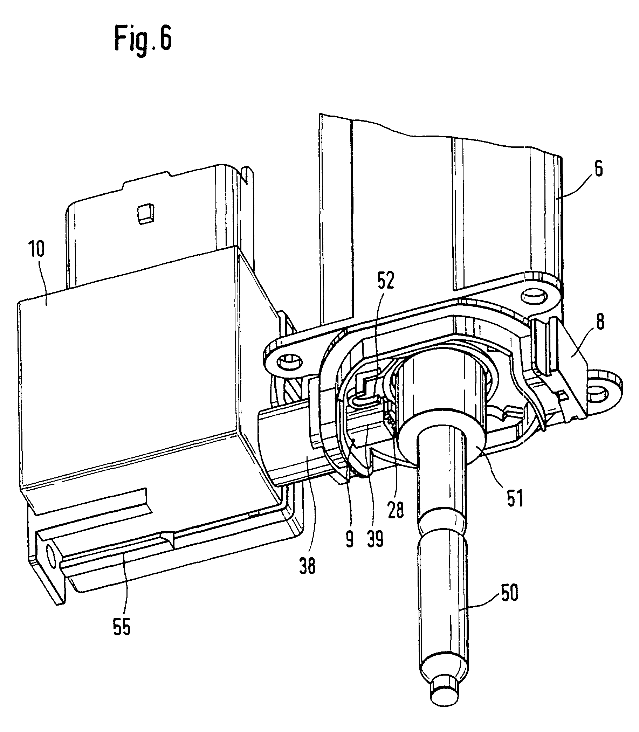

In den Figuren 5 und 6 ist die Antriebseinheit 3 eines Fensterhebers mit Kommutatormotor und dem daran festgelegten Elektronikmodul 1 dargestellt. Die Antriebseinheit umfaßt ein Motorgehäuseteil 6, ein Bürstenteil 8 und ein Getriebegehäuse 7. Das Elektronikgehäuseteil 10 wird über zwei T-Nuten 55 an seiner Unterseite auf das Getriebegehäuse 7 aufgeschoben, wobei das zweite Steckerteil 12 durch eine Öffnung 9 im Bürstenteil 8 in das Gehäuse der Antriebseinheit 3 eingeführt wird. Wie am besten in Fig. 6 zu erkennen ist, steht eine Motorankerwelle 50 des Getriebemotors vom Motorgehäuse 6 durch das Bürstenteil 8 in den Getrieberaum 7 ab. Im Bürstenteil 8 befindet sich ein Bürstenhalter 53, Motorkontakte 52 des Elektromotors und ein auf der Motorankerwelle 50 gelagerter Ringmagnet 51. Beim Aufschieben des Elektronikmoduls 1 auf das Gehäuse 3 der Antriebseinheit dringt das zweite Steckerteil 12 mit dem Endabschnitt 39 in die Öffnung 9 ein, wobei die abgestufte Kante 32 die Eindringtiefe des Steckerteils derart begrenzt, daß das Hall-IC-Bauelement 28 in die Nähe des Ringmagneten 51 gelangt und elastisch biegsame Endabschnitte der Motorkontakte 52 unter Federvorspannung die Kontaktabschnitte 33 der Leistungsstromleiter 23 kontaktieren. Der Dichtungsring 16 verschließt bei vollständig aufgeschobenem Modul 1 die Öffnung 9. Über den Druckausgleichskanal 19 ist der Gehäuseinnenraum 13 des Elektronikmoduls 1 mit dem Gehäuseinnenraum der Antriebseinheit verbunden.

Im Betrieb erfaßt das Hall-IC-Bauelement 28 das variable Magnetfeld des rotierenden Ringmagneten 51 und leitet ein von der Magnetfeldänderung abhängiges Signal über die Anschlußleitungen 22 der auf der Leiterplatte 4 angeordneten Steuerschaltung zu. Umgekehrt steuert die Steuerschaltung der Leiterplatte 4 über das Relais 40 die Stromzufuhr des Elektromotors über die Leistungsstromleiter 23 und Motorkontakte 52.

Anders als bei dem in den Figuren 1 bis 6 dargestellten Ausführungsbeispiel ist es natürlich auch möglich, das Relais 40 zunächst auf die Leiterplatte 4 aufzulöten und die Leiterplatte anschließend mit dem bestückten Relais in das Gehäuse 10 des Elektronikmoduls einzusetzen.

Weiterhin ist in einem anderen Ausführungsbeispiel vorgesehen, das Hall-Sensor-Element nicht an dem Elektronikgehäuseteil sondern im Gehäuse der Antriebseinheit, z.B. im Bürstenhalter festzulegen. Beim Aufschieben des Elektronikmoduls kontaktieren dann von dem zweiten Steckerteil des Moduls abstehende Kontaktabschnitte der Anschlußleitungen, welche aus dem zweiten Steckerteil herausgeführt sind entsprechende Gegenkontakte des im Gehäuse der Antriebseinheit befestigten Hall-Sensor-Elementes.

In einem anderen Ausführungsbeispiel ist vorgesehen, das Hall-Sensor-Element auf der Leiterplatte 4 anzuordnen. Das zweite Steckerteil 12 weist in diesem Ausführungsbeispiel an Stelle der elektrischen Anschlußleitungen 22 Magnetflußleiter auf, welche partiell in dem zweiten Steckerteil eingespritzt sind und leiterplattenseitig und motorseitig mit abstehenden Endabschnitten versehen sind. Die Magnetflußleiter bestehen aus weichmagnetischen Material mit hoher Permeabilität. Die motorseitigen Endabschnitte sind in ihrer Kontur dem Ringmagnet angepaßt und durch einen schmalen Luftspalt von diesem beabstandet. Die leiterplattenseitigen Endabschitte der Magnetflußleiter enden in der Nähe des Hall-IC-Bauelementes auf der Leiterplatte, so daß dieses das in dem aus Ringmagnet, Luftspalt, Magnetflußleitern und Hall-IC gebildeten Magnetkreis induzierte Magnetfeld erfaßt.

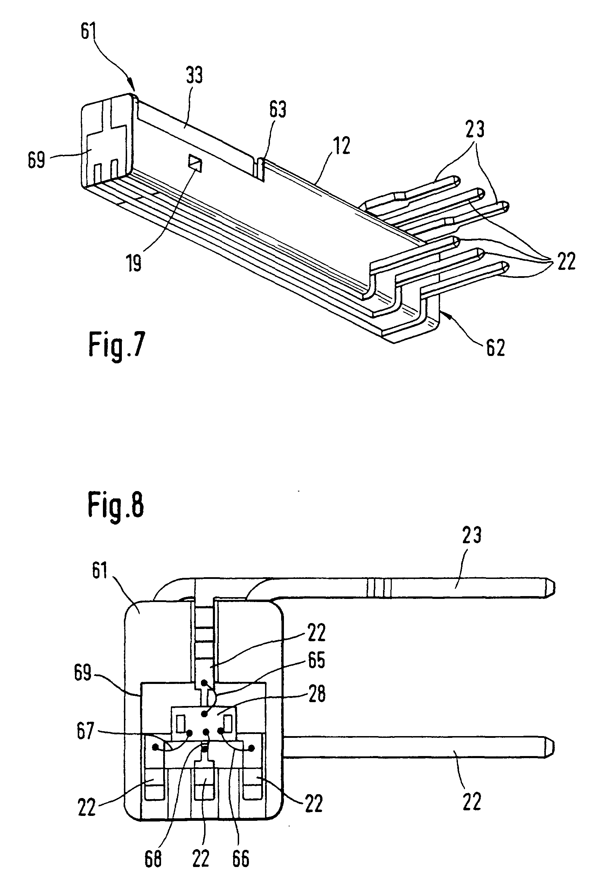

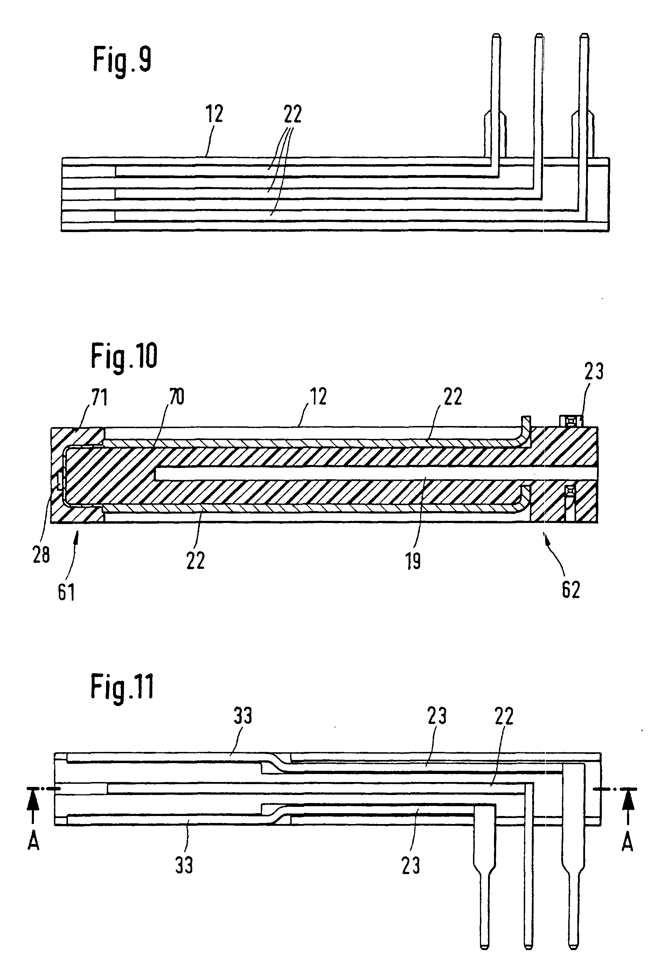

Bei einem weiteren Ausführungsbeispiel ist vorgesehen, das zweite Steckerteil 12 unabhängig von dem Elektronikgehäuseteil 10 herzustellen. In den Figuren 7 bis 11 ist ein als separates Teil hergestelltes, fingerartiges Steckerteil 12 mit einem ersten Endabschnitt 61 und einem zweiten Endabschnitt 62 gezeigt. Das Steckerteil 12 ist aus Isolierstoff gefertigt und mit Leistungsstromleitern 23 und Anschlußleitungen 22 versehen. An dem zweiten Endabschnitt 62 des Steckerteils 12 sind als Steckerstifte ausgebildete Anschlußabschnitte der Leistungstromleiter 23 und Anschlußleitungen 22 aus dem Isolierstoff herausgeführt. Die Leistungstromleiter 23 und Anschlußleitungen 22 sind in Vertiefungen des Steckerteils 12 von dem zweiten Endabschnitt 62 bis zu dem gegenüberliegenden ersten Endabschnitt 61 geführt. An dem ersten Endabschnitt 61 ist an der Stirnseite des Steckerteils 12 eine Vertiefung 69 zur Aufnahme eines Hall-IC-Bauelementes 28 ausgebildet, das über Bonddrähte 65,66,67,68 mit den Anschlußleitungen 22 elektrisch verbunden ist. Auf den mit dem Hall-IC-Bauelement 28 versehenen ersten Endabschnitt 61 ist eine isolierende Vergußmasse 71 aufgetragen, wie am besten in Fig. 10 zu erkennen ist. Die Vergußmasse kann aber auch zusätzlich an anderen Stellen aufgetragen werden, wobei die Kontaktabschnitte 33 der Leistungsstromleiter 23 durch Aussparungen 63 in der Isolierung von außen zugänglich bleiben müssen. Durch die Vergußmasse bzw. die Einbettung in Isolierstoff ist das Hall-IC-Bauelement 28 vor Verschmutzungen, Verunreinigungen und insbesondere vor Kohlenstaub im Bürstenhalter 8 einer elektromotorisch betriebenen Antriebseinheit geschützt. Weiterhin weist das zweite Steckerteil 12, wie in Fig. 7 und Fig. 10 zu erkennen ist, einen von dem zweiten Endabschnitt 62 bis zu einer seitlichen Öffnung in der Nähe der Kontaktabschnitte 33 der Leistungsstromleiter 23 sich erstreckenden Druckausgleichskanal 19 auf.

Das Steckerteil 12 kann beispielsweise dadurch hergestellt werden, daß ein Vorspritzling 70 aus Kunststoff mit Vertiefungen hergestellt wird, in welche die Leistungsstromleiter 23 und Anschlußleitungen 22 als gestanzte Metallteile eingelegt werden. Das Hall-IC-Bauelement wird an dem ersten Endabschnitt 61 des Steckerteils in die Vertiefung 69 eingesetzt und über Bonddrähte 65,66,67 und 68 oder in anderer geeigneter Weise mit den Anschlußleitungen 22 elektrisch verbunden. Danach wird Vergußmasse 71 bzw. Mold-Masse auf den Vorspritzling 70 aufgetragen, wobei zumindest die Kontaktabschnitte 33 der Leistungsstromleiter 23 und die steckerstiftartigen Anschlußabschnitte der Leistungstromleiter 23 und Anschlußleitungen 22 ausgespart werden. Es ist auch möglich, zunächst das Hall-IC-Bauelement auf ein Stanzgitter aufzulöten, welches Stanzgitter aus gestanzten Metallbahnen besteht, die über Verbindungstege miteinander verbundenen sind, und anschließend das Stanzgitter mit Kunststoff zu umspritzen, so daß das Hall-IC-Bauelement in Kunststoff eingebettet wird. Durch Aussparungen im Kunststoff können dann die Verbindungsstege in an sich bekannter Weise getrennt werden, so daß elektrisch voneinander getrennte Leistungsstromleiter und Anschlußleitungen entstehen. Es ist auch möglich, das zweite Steckerteil 12 als 3-D MID-Bauteil (3-D Mouldes Interconnection Device) herzustellen. Hierzu wird eine gespritzes, dreidimensonales Kunststoff-Basisteil mit aufmetallisierten Leiterbahnen versehen, welche die Leistungstromleiter und Anschlußleitungen bilden. Anschließend wird ein Hall-IC-Bauelement 28 mit den Anschlußleitungen kontaktiert und isolierende Mold-Masse 71 auf das Basisteil 70 aufgetragen.

Das zweite Steckerteil 12 kann nach seiner Herstellung in ein Spritzgußwerkzeug eingelegt werden und mit dem Elektronikgehäuseteil 10 umspritzt werden. Es ist aber auch möglich das zweite Steckerteil 12 in eine Öffnung in einer Seitenwand des Elektronikgehäuseteils 10 einzusetzen und festzukleben oder mit Rastmitteln an der Seitenwand festzulegen. Das Steckerteil 12 wird derart an dem Elektronikgehäuseteil 10 angeordnet, daß der zweite Endabschnitt 62 dem Gehäuseinnenraum 13 zugewandt ist und der erste Endabschnitt 61 mit dem Hall-IC-Bauelement von dem Elektronikgehäuseteil 10 nach außen absteht. Ähnlich wie bei dem Ausführungsbeispiels in Fig. 1 kann das Steckerteil 12 noch mit einer abgestuften Kante oder einer umlaufenden Nut versehen sein, in die ein Dichtungsring eingelegt wird.

## Patentansprüche

1. Elektronikmodul für eine elektromotorisch betriebene Antriebseinheit, insbesondere für einen elektromotorischen Fensterheber eines Kraftfahrzeugs, umfassend ein am Gehäuse der Antriebseinheit festlegbares Elektronikgehäuseteil (10) mit einem daran angeordneten Steckerteil (11) und einer in eine Aufnahme (5) des Elektronikgehäuseteils (10) eingesetzten Leiterplatte (4) mit elektrischen und/oder elektronischen Bauelementen, welche Leiterplatte mit Kontaktelementen (21) des Steckerteils (11) und mit an dem Elektronikgehäuseteil (10) festgelegten Leistungsstromleitern (23) elektrisch kontaktiert ist, wobei die Leistungsstromleiter (23) mit von dem Elektronikgehäuseteil abstehenden Kontaktabschnitten (33) versehen sind, **dadurch gekennzeichnet, daß** das Elektronikgehäuseteil (10) als separates Gehäuse ausgebildet ist, welches einen mit einem Deckel (2) verschließbaren Gehäuseinnenraum (13) aufweist, daß die Leiterplatte (4) vollständig in dem Gehäuseinnenraum (13) angeordnet ist und daß ein zweites Steckerteil (12) an dem Elektronikgehäuseteil (10) angeordnet ist, durch welches wenigstens die Kontaktabschnitte (33) der Leistungsstromleiter (23) aus dem Elektronikgehäuseteil (10) herausgeführt sind.

2. Elektronikmodul nach Anspruch 1, **dadurch gekennzeichnet, daß** das zweite Steckerteil (12) zusätzlich elektrische Anschlußleitungen (22) von elektrischen und/oder elektronischen Bauelementen (28) aufweist, welche Bauelemente außerhalb des Gehäuseinnenraumes (13) angeordnet sind.

3. Elektronikmodul nach Anspruch 1, **dadurch gekennzeichnet, daß** das zweite Steckerteil (12) wenigstens einen Magnetflußleiter aufweist.

4. Elektronikmodul nach Anspruch 2, **dadurch gekennzeichnet, daß** das zweite Steckerteil (12) als ein von dem Elektronikgehäuseteil (10) abstehender, einstückig mit dem Elekronikgehäuseteil (10) verbundener Zapfen ausgebildet ist, an dessen vom Gehäuse (10) abgewandten Ende (31) ein Hall-Sensor-Element (28), insbesondere ein Hall-IC-Bauelement, angeordnet ist, dessen elektrische Anschlüsse über die in dem Stekkerteil (12) vorgesehenen elektrischen Anschlußleitungen (22) mit der Leiterplatte (4) verbunden sind.

5. Elektronikmodul nach Anspruch 4, **dadurch gekennzeichnet, daß** das Elektronikgehäuseteil (10) als Spritzgußteil mit angespritzten ersten und zweiten Steckerteil (11,12) gefertigt ist.

6. Elektronikmodul nach Anspruch 2, **dadurch gekennzeichnet, daß** das zweite Steckerteil (12) unabhängig von dem Elektronikgehäuseteil (10) als separates Teil aus Isolierstoff mit zumindest teilweise in den Isolierstoff eingebetteten Leistungstromleitern (23) und Anschlußleitungen (22) für elektrische und/oder elektronische Bauelemente hergestellt ist, wobei in dem zweiten Steckerteil (12) wenigstens ein Hall-Sensor-Element (28), insbesondere ein Hall-IC-Bauelement, vollständig in Isolierstoff eingebettet ist und das zweite Steckerteil (12) an dem Elektronikgehäuseteil (10) angeordnet ist.

7. Elektronikmodul nach Anspruch 6, **dadurch gekennzeichnet, daß** das zweite Steckerteil (12) mit einem ersten Endabschnitt (61) und einem diesen gegenüberliegenden zweiten Endabschnitt (62) ausgestaltet ist, daß an dem ersten Endabschnitt (61) das wenigstens eine vollständig in Isolierstoff eingebettete Hall-Sensor-Element (28) mit den Anschlußleitungen (22) elektrisch leitend verbunden ist und daß an dem zweiten Endabschnitt (62) Anschlußabschnitte der Leistungsstromleiter (23) und der Anschlußleitungen (22) aus dem Isolierstoff herausgeführt sind.

8. Elektronikmodul nach Anspruch 7, **dadurch gekennzeichnet, daß** das zweite Steckerteil (12) als Isolierstoffspritzgußteil mit zumindest teilweise in die Isolierstoffmasse eingespritzten Leistungsstromleitern (23) und Anschlußleitungen (22) gefertigt ist und daß zumindest das Hall-Sensor-Element (28) mit einer isolierenden Vergußmasse (71) abgedeckt ist.

9. Elektronikmodul nach Anspruch 7, **dadurch gekennzeichnet, daß** zumindest zwischen dem ersten Endabschnitt (61) und dem zweiten Endabschnitt (62) des zweiten Steckerteils (12) in dem Isolierstoff Aussparungen (63) vorgesehen sind, durch welche die Kontaktabschnitte (33) der Leistungsstromleiter (23) von außen kontaktierbar sind.

10. Elektronikmodul nach Anspruch 7, **dadurch gekennzeichnet, daß** die Anschlußabschnitte der Leistungsstromleiter (23) und der Anschlußleitungen (22) an dem zweiten Endabschnitt (62) des zweiten Steckerteils (12) als in einer Richtung abstehende Kontaktstifte ausgebildet sind.

11. Elektronikmodul nach einem der vorstehenden Ansprüche, **dadurch gekennzeichnet, daß** das Elektronikgehäuseteil (10) einen sich vom Gehäuseinnenraum (13) durch das zweite Stekkerteil (12) nach außen erstreckenden Druckausgleichskanal (19) aufweist.

12. Elektronikmodul nach Anspruch 4 oder 6, **dadurch gekennzeichnet, daß** die leiterplattenseitigen Anschlußabschnitte der Kontaktelemente (21), Leistungsstromleiter (23) und elektrischen Anschlußleitungen (22) parallel zueinander verlaufend durch Kontaktöffnungen der Leiterplatte (4) hindurchgeführt und mit der Leiterplatte verlötet sind.

13. Elektronikmodul nach Anspruch 12, **dadurch gekennzeichnet, daß** in dem Elektronikgehäuseteil (10) ein elektromagnetisches Relais (40) angeordnet ist, dessen Anschlüsse (24) parallel zu den leiterplattenseitigen Anschlußabschnitten der Kontaktelemente (21), Leistungsstromleiter (23) und elektrischen Anschlußleitungen (22) durch Kontaktöffnungen der Leiterplatte (4) hindurchgeführt und mit der Leiterplatte verlötet sind.

14. Elektronikmodul nach Anspruch 12 oder 13, **dadurch gekennzeichnet, daß** die Leiterplatte (4) im Gehäuseinnenraum (13) des Elektronikgehäuseteils dem Deckel (2) unmittelbar gegenüberliegend angeordnet ist.

15. Elektronikmodul nach einem der Ansprüche 12 bis 14, **dadurch gekennzeichnet, daß** die durch die Kontaktöffnungen der Leiterplatte (4) hindurchgeführten Anschlußabschnitte im Tauchlotverfahren mit der Leiterplatte verlötet sind.

16. Elektronikmodul nach einem der vorstehenden Ansprüche, **dadurch gekennzeichnet, daß** das Elektronikgehäuseteil (10) im Auflagebereich (14) des Deckels (2) eine umlaufende Dichtung (15) aufweist.

17. Elektronikmodul nach Anspruch 1, **dadurch gekennzeichnet, daß** das Elektronikgehäuseteil (10) des Elektronikmoduls am Gehäuse (3) einer elektromotorisch betriebenen Antriebseinheit festlegbar ist und mit dem zweiten Steckerteil (12) in eine entsprechend ausgebildete Öffnung (9) des Gehäuses (3) der Antriebseinheit derart einführbar ist, daß die Leistungsstromleiter (23) mit im Gehäuse der Antriebseinheit angeordneten Motorkontakten (52) des Gebriebemotors kontaktieren.

18. Elektronikmodul nach Anspruch 17, **dadurch gekennzeichnet, daß** das zweite Steckerteil (12) an seiner Umfangsfläche einen umlaufenden Dichtungsring (16) aufweist und daß die im Gehäuse (3) der Antriebseinheit zur Einführung des zweiten Steckerteils (12) ausgebildete Öffnung (9) bei der Festlegung des Elektronikmoduls (1) an der Antriebseinheit durch den Dichtungsring (16) des zweiten Steckerteils (12) dicht verschließbar ist.

19. Elektronikmodul nach Anspruch 18, **dadurch gekennzeichnet, daß** ein an dem abstehenden Ende (31) des zweiten Stekkerteils (12) vorgesehenes Hall-Sensor-Element (28) bei auf die Antriebseinheit aufgestecktem Elektronikmodul das Magnetfeld eines auf der Motorankerwelle (50) des Get:riebemotors angeordneten Ringmagneten (51) erfaßt.

## Claims

1. Electronic module for an electric-motor-powered drive unit, in particular for an electric-motor-powered window lifter of a motor vehicle, comprising an electronic housing part (10) which can be secured to the housing of the drive unit and has a plug part (11) arranged thereon and a printed circuit board (4) which can be inserted into a receptacle (5) of the electronic housing part (10) and has electric and/or electronic components, which printed circuit board is in electrical contact with contact elements (21) of the plug part (11) and with power current conductors (23) which are secured to the electronic housing part (10), the power current conductors (23) being provided with contact sections (33) which protrude from the electronic housing part, **characterized in that** the electronic housing part (10) is embodied as a separate housing which has a housing interior (13) which can be closed off with a lid (2), **in that** the printed circuit board (4) is completely arranged in the interior (13) of the housing, and **in that** a second plug part (12) is arranged on the electronic housing part (10) through which at least the contact sections (33) of the power current conductors (23) are led out of the electronic housing part (10).

2. Electronic module according to Claim 1, **characterized in that** the second plug part (12) additionally has electrical connecting lines (22) of electric and/or electronic components (28), which components are arranged outside the interior (13) of the housing.

3. Electronic module according to Claim 1, **characterized in that** the second plug part (12) has at least one magnetically permeable element.

4. Electronic module according to Claim 2, **characterized in that** the second plug part (12) is constructed as pin which projects from the electronic housing part (10) and is integrally connected to the electronic housing part (10) and at whose end (31) facing away from the housing (10) a Hall sensor element (28), in particular a Hall IC component, is arranged, the electrical terminals of said component being connected to the printed circuit board (4) by means of the electrical connecting lines (22) which are provided in the plug part (12).

5. Electronic module according to Claim 4, **characterized in that** the electronic housing part (10) is fabricated as an injection-moulded part with first and second plug parts (11, 12) which are attached by injection moulding.

6. Electronic module according to Claim 2, **characterized in that** the second plug part (12) is fabricated independently of the electronic housing part (10) as a separate part made of insulating material with power current conductors (23) and connecting lines (22) for electrical and/or electronic components, said power conductors (23) and connecting lines (22) being at least partially embedded in the insulating material, at least one Hall sensor element (28), in particular a Hall IC component, being completely embedded in insulating material in the second plug part (12), and the second plug part (12) being arranged in the electronic housing part (10).

7. Electronic module according to Claim 6, **characterized in that** the second plug part (12) is configured with a first end section (61) and a second end section (62) located opposite it, **in that** the at least one Hall sensor element (28) which is embedded completely in insulating material is electrically conductively connected to the connecting lines (22) at the first end section (61), and **in that** connecting sections of the power current conductors (23) and of the connecting lines (22) are led out of the insulating material at the second end section (62).

8. Electronic module according to Claim 7, **characterized in that** the second plug part (12) is fabricated as an insulating material injection-moulded part with power current conductors (23) and connecting lines (22) which are at least partially injection-moulded into the mass of insulating material, and **in that** at least the Hall sensor element (28) is covered with an insulating sealing compound (71).

9. Electronic module according to Claim 7, **characterized in that** cut-outs (63), through which contact can be made from the outside with the contact sections (33) of the power current conductors (23), are provided in the insulating material, at least between the first end section (61) and the second end section (62).

10. Electronic module according to Claim 7, **characterized in that** the connecting sections of the power current conductors (23) and of the connecting lines (22) are embodied as contact pins which project in one direction on the second end section (62) of the second plug part (12).

11. Electronic module according to one of the preceding claims, **characterized in that** the electronic housing part (10) has a pressure equalization duct (19) which projects outwards through the second plug part (12) from the interior (13) of the housing.

12. Electronic module according to Claim 4 or 6, **characterized in that** the printed-circuit-board-end connecting sections of the contact elements (21), power current conductors (23) and electrical connecting lines (22) are led, running parallel to one another, through contact openings in the printed circuit board (4) and are soldered to the printed circuit board.

13. Electronic module according to Claim 12, **characterized in that** an electromagnetic relay (40) whose terminals (24) are led through contact openings in the printed circuit board (4), in parallel with the printed-circuit-board-end connecting sections of the contact elements (21), power current conductors (23) and electrical connecting lines (22), and are soldered to the printed circuit board, is arranged in the electronic housing part (10).

14. Electronic module according to Claim 12 or 13, **characterized in that** the printed circuit board (4) is arranged in the interior (13) of the housing of the electronic housing part, directly facing the lid (2).

15. Electronic module according to one of Claims 12 to 14, **characterized in that** the connecting sections which are led through the contact openings in the printed circuit board (4) are soldered to the printed circuit board using the immersion soldering method.

16. Electronic module according to one of the preceding claims, **characterized in that** the electronic housing part (10) has a peripheral seal (15) in the supporting region (14) of the lid (2).

17. Electronic module according to Claim 1, **characterized in that** the electronic housing part (10) of the electronic module can be secured to the housing (3) of an electric-motor-operated drive unit and can be inserted with the second plug part (12) into a correspondingly constructed opening (9) in the housing (3) of the drive unit, **in that** the power current conductors (23) can be placed in contact with motor contacts (52), arranged in the housing of the drive unit, of the geared motor.

18. Electronic module according to Claim 17, **characterized in that** the second plug part (12) has a peripheral sealing ring (16) on its circumferential face, and **in that** the opening (9) which is constructed in the housing (3) of the drive unit for the insertion of the second plug part (12) can be closed in a sealed fashion by the sealing ring (16) of the second plug part (12) when the electronic module (1) is secured to the drive unit.

19. Electronic module according to Claim 18, **characterized in that** a Hall sensor element (28) which is provided at the projecting end (31) of the second plug part (12) senses the magnetic field of a ring magnet (51) arranged on the motor armature shaft (50) of the geared motor, when the electronic module is plugged onto the drive unit.

## Revendications

1. Module électronique pour une unité d'entraînement à moteur électrique, notamment pour un lève-glace électrique d'un véhicule automobile, comprenant une partie de boîtier électronique (10) qui se fixe au boîtier de l'unité d'entraînement, une partie de connecteur (11) prévue sur cette partie de boîtier et une plaque de circuit (14) placée dans un logement (5) de la partie (10) du boîtier électronique et comportant des composants électriques et/ou électroniques,
la plaque de circuit étant en contact électrique avec des éléments de contact (21) de la partie de connecteur (11) et avec des conducteurs de courant de puissance (23) fixés à la partie (10) du boîtier électronique, les conducteurs de courant de puissance (23) étant munis de segments de contact (33) en saillie par rapport à la partie de boîtier électronique,
**caractérisé en ce que**
la partie (10) du boîtier électronique est constituée sous la forme d'un boîtier séparé dont la cavité intérieure (13) se ferme à l'aide d'un couvercle (2), la plaque de circuit (4) est installée complètement dans la cavité (13) du boîtier, et on installe, sur la partie (10) du boîtier électronique, une seconde partie de connecteur (13) à travers laquelle au moins les segments de contact (33) des conducteurs de courant de puissance (23) sortent de la partie (10) du boîtier électronique.

2. Module électronique selon la revendication 1,
**caractérisé en ce que**
la seconde partie de connecteur (12) comporte des lignes de branchement électriques (22) supplémentaires pour des composants électriques et/ou électroniques (28), ces composants étant placés à l'extérieur de la cavité (13) du boîtier.

3. Module électronique selon la revendication 1,
**caractérisé en ce que**
la seconde partie de connecteur (12) comporte au moins un conducteur de flux magnétique.

4. Module électronique selon la revendication 2,
**caractérisé en ce que**
la seconde partie de connecteur (12) est réalisée sous la forme d'une broche en saillie de la partie (10) du boîtier électronique, réalisée en une seule pièce avec cette partie (10) et dont l'extrémité (31) opposée au boîtier (10) comporte un élément de capteur Hall (28), notamment un composant intégré Hall, dont les branchements électriques sont reliés par les lignes de branchement électriques (22) prévues dans la partie de connecteur (12) avec la plaque de circuit (4).

5. Module électronique selon la revendication 4,
**caractérisé en ce que**
la partie (10) du boîtier électronique est réalisée sous la forme d'une pièce injectée sur laquelle sont injectées la première et la seconde partie de connecteur (11, 12).

6. Module électronique selon la revendication 2,
**caractérisé en ce que**
la seconde partie de connecteur (12) est réalisée comme pièce séparée en matière isolante avec au moins en partie des conducteurs de courant de puissance (23) intégrés dans la matière isolante et des lignes de branchement (22) pour les composants électriques et/ou électroniques, indépendamment de la partie (10) du boîtier électronique,
et la seconde partie de connecteur (12) comporte au moins un élément de capteur Hall (28), notamment un composant en circuit intégré Hall, noyé complètement dans la matière isolante et la seconde partie de connecteur (12) est montée sur la partie (10) du boîtier électronique.

7. Module électronique selon la revendication 6,
**caractérisé en ce que**
la seconde partie de connecteur (12) est munie d'un premier segment d'extrémité (61) et d'un second segment d'extrémité (62) opposé à ce dernier,
le premier segment d'extrémité (61) comporte au moins un élément de capteur Hall (28) noyé complètement dans la matière isolante, en étant relié électriquement aux lignes de branchement (22), et
le second segment d'extrémité (62) comporte des segments de branchement des conducteurs électriques de puissance (23) et des lignes de branchement (22) sortant de la matière isolante.

8. Module électronique selon la revendication 7,
**caractérisé en ce que**
la seconde partie de connecteur (12) est une pièce injectée en matière isolante avec des conducteurs de courant de puissance (23) injectés au moins en partie dans la masse de matière isolante et des lignes de branchement (22), et au moins l'élément de capteur Hall (28) est couvert d'une masse coulée isolante (71).

9. Module électronique selon la revendication 7,
**caractérisé en ce qu'**
au moins entre le premier segment d'extrémité (61) et le second segment d'extrémité (62) de la seconde partie de connecteur (12) il y a des cavités (63) dans la matière isolante par lesquelles les segments de contact (33) des conducteurs électriques de puissance (23) sont mis en contact à partir de l'extérieur.

10. Module électronique selon la revendication 7,
**caractérisé en ce que**
les segments de branchement des conducteurs électriques de puissance (23) et les lignes de branchement (22) du second segment d'extrémité (62) de la seconde partie de connecteur (12) sont réalisés sous la forme de broches de contact en saillie dans une direction.

11. Module électronique selon l'une des revendications précédentes,
**caractérisé en ce que**
la partie de boîtier électronique (10) comporte un canal de compensation de pression (19) partant de la cavité intérieure (13) du boîtier vers l'extérieur en traversant la seconde partie de connecteur (12).

12. Module électronique selon la revendication 4 ou 6,
**caractérisé en ce que**
les segments de branchement des éléments de contact (21) du côté de la plaque de circuit, les conducteurs de courant de puissance (23) et les lignes de branchement électriques (22) sont parallèles et traversent des orifices de contact de la plaque de circuit (4) à laquelle ils sont soudés.

13. Module électronique selon la revendication 12,
**caractérisé en ce qu'**
on monte, dans la partie (10) du boîtier électronique, un relais électromagnétique (40) dont les branchements (24) traversent des orifices de contact de la plaque de circuit (4) parallèlement aux segments de branchement du côté de la plaque de circuit des éléments de contact (21), des conducteurs de courant de puissance (23) et des lignes de branchement électriques (22), et sont soudés à la plaque de circuit.

14. Module électronique selon la revendication 12 ou 13,
**caractérisé en ce que**
la plaque de circuit (4) est prévue dans la cavité (13) de la partie de boîtier électronique, directement au regard du couvercle (2).

15. Module électronique selon l'une des revendications 12 à 14,
**caractérisé en ce que**
les segments de branchement traversant les orifices de contact des plaques de circuit (4) sont soudés à la plaque de circuit par un procédé de soudage à la vague.

16. Module électronique selon l'une des revendications précédentes,
**caractérisé en ce que**
la partie de boîtier électronique (10) comporte un joint périphérique (15) dans la zone d'appui (14) du couvercle (2).

17. Module électronique selon la revendication 1,
**caractérisé en ce que**
la partie (10) du boîtier électronique du module électronique est fixée au boîtier (3) d'une unité d'entraînement à moteur électrique et s'introduit avec la seconde partie de boîtier (12) dans un orifice (9) correspondant du boîtier (3) de l'unité d'entraînement, de façon que les conducteurs de courant (23) soient en contact avec les contacts (52) du motoréducteur logé dans le boîtier de l'unité d'entraînement.

18. Module électronique selon la revendication 17,
**caractérisé en ce que**
la seconde partie de connecteur (12) comporte un joint d'étanchéité périphérique (16) au niveau de sa surface périphérique et l'orifice (9) réalisé dans le boîtier (3) de l'unité d'entraînement pour introduire la seconde partie de connecteur (12) lorsqu'on fixe le module électronique (1) à l'unité d'entraînement, se ferme de manière étanche par le joint d'étanchéité annulaire (16) de la seconde partie de connecteur (12).

19. Module électronique selon la revendication 18,
**caractérisé en ce qu'**
un élément de capteur Hall (28) prévu sur l'extrémité en saillie (31) de la seconde partie de connecteur (12) détecte, lorsque le module électronique est engagé sur l'unité d'entraînement, le champ magnétique d'un aimant annulaire (51) prévu sur l'arbre (50) de l'induit du moteur du motoréducteur.
